Europäisches Patentamt

European Patent Office

Office européen des brevets

(19)

(11) Publication number: **0 023 414**
**B1**

# EUROPEAN PATENT SPECIFICATION

(12)

(45) Date of publication of patent specification: **26.10.83**

(51) Int. Cl.³: **B 62 L 1/16**

(21) Application number: **80302518.8**

(22) Date of filing: **24.07.80**

(54) **Calliper brake.**

(30) Priority: **27.07.79 JP 104393/79 U**

(43) Date of publication of application:
**04.02.81 Bulletin 81/5**

(45) Publication of the grant of the patent:
**26.10.83 Bulletin 83/43**

(84) Designated Contracting States:
**BE DE FR GB IT**

(56) References cited:
**CH - A - 36 015**
**DE - U - 7 130 443**
**FR - A - 477 504**
**FR - A - 955 240**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho, Minamimachi**
**Midorigaoka, Sakai-shi Osaka (JP)**

(74) Representative: **Ferguson, James MacKay et al, Cruikshank & Fairweather 19 Royal Exchange Square**
**Glasgow, G1 3AE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Calliper brake

This invention relates to calliper brakes as used mainly on bicycles, and more particularly to a calliper brake which is actuated by pulling a control wire so that an arm actuator connected thereto operates to cause a pair or braking arms carrying brake shoes to swing and urge the brake shoes against a wheel rim for exerting the braking action.

Generally, a calliper brake of a centre-pull type or side-pull type is well-known. The centre-pull type calliper brake comprises a gate-like supporting member, a pair of brake arms which are pivoted thereto, carry at the lower ends brake shoes respectively, and are spaced from one another at their upper ends, and an arm actuator interposed between said spaced upper ends, the arm actuator being connected to a control wire, the fixing member carrying an outer sheath guiding the control wire so that while no braking action is being performed a constant clearance gap is maintained between the wheel rim and each brake shoe. For initiating a braking action, the control wire is pulled to move the arm actuator upwardly to swing the brake arms, thereby urging the brake shoes towards the wheel rim. This generally fixed clearance gap keeps the brake blocks from unintentionally contacting the wheel rim during vibration as for example when the wheel passes over an irregular surface.

However, in the conventional calliper brake, the rate of displacement of each brake arm and the brake shoes and brake blocks thereon towards the wheel rim, relative to a given displacement of the control wire and of the arm actuator is unchanged from the beginning of its displacement to the end so that the brake blocks move at a speed which is in a fixed relation to the speed of upward movement of the arm actuator. In other words, the displacement rate of each brake shoe during an initial, brake displacement, phase prior to its contact with the wheel rim is substantially the same as that obtaining during a second, braking force applying, phase of the complete braking operation.

Thus, when the control wire is pulled to execute a braking operation the distance traversed by each brake block before it contacts the wheel rim is, despite the absence of any actual braking action on the wheel rim, the same with respect to a given displacement of the arm actuator as the distance traversed after it is brought into contact with the rim. As a result the movement of the control wire necessary to bring the brake shoes into contact with the wheel rim is considerably greater than that required for achieving the braking effect so that the movement of a brake lever for pulling the control wire is also greater thus leading to a delay in the application of a full braking force to the wheel rim.

From FR—A—1000765 there is known a calliper brake for use in applying a braking force to the rim of a wheel upon pulling of a control wire in use of said brake, which brake comprises a support member, a pair of brake arms pivotally mounted on the support member, one end of each of said brake arms having a brake shoe, the other ends of said brake arms being spaced apart and an actuator arm means movable relative to the support member and disposed between said other ends of the brake arms, said arm actuator means having a control wire connector for securing one end of a said control wire to the arm actuator means in use of the brake, and presenting cam faces engageable with said other ends of said brake arms so that said control wire when pulled moves the arm actuator means thereby causing the brake arms to swing and move said brake shoes towards the wheel rim in use of said brake, said cam faces are shaped to provide displacement of said brake shoes in a direction towards the wheel rim during an initial, brake-displacement, phase of braking in which, in use of the brake, brake blocks mounted in said brake shoes are brought into position, substantially adjacent said wheel rim at a faster rate with respect to a given displacement of said arm actuator means and from this position the cam faces are shaped to provide displacement of the brake shoes in said direction at a slower rate with respect to a said given displacement of the arm actuator means, during a second, braking force-applying, phase of braking in which said brake blocks are pressed against said wheel rim to apply a braking force thereto.

In the above described known brake there is provided a progressive braking action such that the brake displacement rate is gradually reduced. This arrangement however can only provide a relatively small reduction in overall braking time and even then only at a cost of some reduction in the magnitude of the braking force applied to the wheel rim at least during an initial part of the braking force applying phase of the braking operation.

It is an object of the present invention to avoid or minimize one or more of the above disadvantages and in particular to provide a calliper brake which can provide optimum gap between the wheel rim and each brake block in the resting position of the latter and yet achieve a quick braking effect even with a small movement of the control wire.

According to the invention there is provided a calliper brake for use in applying a braking force to the rim of a wheel upon pulling of a control wire in use of said brake, which brake comprises a support member, a pair of brake arms pivotally mounted on the support member, one end of each of said brake arms having a brake shoe, the other ends of said brake arms being spaced apart and an actuator arm means movable relative to the support member and disposed between said other ends of the brake arms, said arm actuator means having a control wire connector for securing one end of a said control wire to the arm actuator means in use of the brake, and presenting cam faces engageable with said other ends of said brake arms so that said control wire when pulled moves the arm actuator means thereby causing the brake arms to swing and move said brake shoes towards the wheel rim in use of said brake, said cam faces are shaped and disposed to provide displacement of said brake shoes in a direction towards the wheel rim during an initial, brake-displacement, phase of braking in which, in use of the brake, brake blocks mounted in said brake shoes are brought into position, substantially adjacent said wheel rim at a greater rate with respect to a given displacement of said arm actuator means and from this position the cam faces are shaped and disposed to provide displacement of the brake shoes in said direction at a lower rate with respect to a said given displacement of the arm actuator means, during a second, braking force-applying, phase of braking in which said brake blocks are pressed against said wheel rim to apply a braking force thereto, characterized in that first cam face means are shaped and disposed to provide a greater brake displacement rate, during the initial brake displacement phase, up until the transition from said first cam face means to second cam face means of said arm actuator means in controlling displacement of said brake arms, which second cam face means are shaped and disposed to provide a lower brake displacement rate during said braking force-applying phase in order to press the brake blocks slowly against the wheel rim with a large braking force, the cam face means being formed and disposed so that immediately before said transition said brake displacement rate is substantially greater than immediately after said transition, there being a substantial and abrupt change in the brake displacement rate at said transition whereby average brake displacement rate during the initial brake displacement phase is increased and overall braking time reduced; and in that there is provided return spring means disposed for acting between said supporting member and each of said brake arms.

The arm actuator may be formed as a plate-form member presenting to said other ends of the brake arms edge faces each formed as adjoining discrete first and second cam faces.

Alternatively, the arm actuator means may be in the form of a base member, first and second cam bodies pivotally connected to said base member and having outer edge faces facing away from one another which form, at an initial angular inclination to said control wire in the initial brake displacement phase, said first cam face means and, at a different angular inclination to the control wire in the braking force-applying phase, said second cam face means, and inner edge faces facing towards one another and formed as engaging cam faces, a third cam body presenting two outwardly facing control cam faces engageable with respective engaging cam faces of the first and second cam bodies and a resiliently deformable member connecting said third cam body with said base member, said third cam body carrying said wire connector for said control wire and being movable relative to the first and second cam bodies against the force of said resiliently deformable connecting member for swinging the first and second cam bodies on said base member during said braking force-applying phase. Alternatively again, the cam actuator may be in the form of a base member and a pair of cam bodies pivotally connected to said base member, each said cam body each having outer edge faces facing away from one another which form, at an initial angular inclination to the control wire in the initial brake displacement phase, said first cam face means and, at a different angular inclination to the control wire in the brake force-applying phase, said second cam face means, said base member carrying said wire connector for a said control wire, the pivotal connections between said cam bodies and said base member being disposed so that when said control wire is pulled, in use of the brake, to move said base member thereby displacing said pivotal connection points the cam engaging positions of said other ends of said brake arms with the respective first cam faces are initially nearer the longitudinal axis of the control wire of the control wire connector than are said pivotal connection points during the brake displacement phase of braking and as said base member continues to move, said cam engaging positions move along said first cam faces moving said cam engaging positions away from said control wire axis until at a transition from the first to the second cam faces the cam engaging positions are farther from the control wire axis than the pivotal connection points whereupon the thrust of the brake arms on the cam bodies causes the cam bodies to swing about their pivotal connection points to the base member thereby changing the inclination of the cam faces relative to said control wire axis so that the first cam face means now constitute the second cam face means.

The aforesaid first cam face means function to move the brake shoes quickly towards the wheel rim relative to a given displacement of the arm actuator, that is, to a given displacement of the control wire, and are each inclined at a larger angle to the longitudinal axis of the control wire at the control wire connector i.e. to the direction of pull of the control wire. The second cam face means provide a slower displacement rate of the brake shoes and blocks therein and are each inclined at a smaller angle to said longitudinal axis. The first and second cam faces need not be formed as discrete surfaces extending at an angle to each other but may be comprised by respective parts of a single continuous cam surface, the different respective angles of inclination being provided by different positions of respective cam bodies within a range of pivotal movement of said cam bodies.

In any case, the arm actuator is provided with two first cam face means and two second cam face means, the respective first and second cam faces (or face portions) having different actual or effective angles of inclination in use of the brake so that when the brake arms swing under the control of the first and second cam faces the brake shoes are moved quickly until they are brought into contact with the wheel rim at the transition point and then are moved slowly after contacting the rim. Hence, a reliable braking effect is achieved even with a total displacement of the control wire which is smaller than that required in conventional brakes and the brake shoes, after contacting the rim, are urged thereto with greater force with respect to the effort exerted in pulling the control wire, thereby achieving an intensive braking effect.

Preferred embodiments and advantages of the present invention will appear from the following detailed description given by way of example with reference to the accompanying drawings.

Fig. 1 is a front view of an embodiment of a calliper brake of the invention;

Fig. 2 is a side view of the embodiment in Fig. 1;

Fig. 3 is a sectional view of a principal portion of the Fig. 1 embodiment;

Fig. 4 is a sectional view taken on the line IV—IV in Fig. 1;

Fig. 5 is a partial front view of a second embodiment of the invention;

Fig. 6 is a view explanatory of operation of the Fig. 5 embodiment;

Fig. 7 is a partial front view of a third embodiment of the invention; and

Fig. 8 is a view explanatory of operation of the Fig. 7 embodiment.

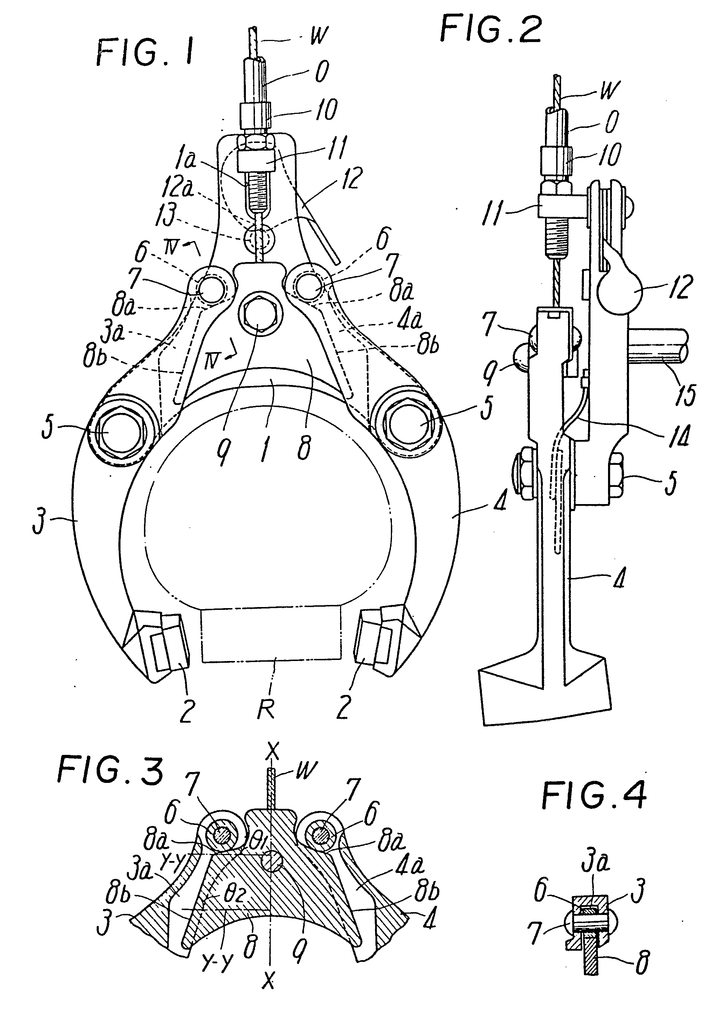

Referring to Figs. 1 to 4, reference numeral 1 designates a supporting member of an inverted Y-like shape arranged to be fixed to a frame of a bicycle. The supporting member 1 has at its central upward projection a vertically elongate slot 1a and pivotally supports at the ends of both side downward projections a pair of brake arms 3 and 4 each carrying at the lower end thereof a brake shoe 2.

The brake arms 3 and 4 are approximately C-shaped and are pivoted at intermediate points to the supporting member 1 through pivot pins 5 respectively, return springs 14 being interposed between the supporting member 1 and the brake arms 3 and 4. The upper end portions of brake arms 3 and 4 are spaced from one another and are formed with recesses 3a and 4a for receiving therein an arm actuator to be hereinafter described. With the recesses 3a and 4a, roller cam followers 6 are supported rotatably by pins 7.

The arm actuator 8 is interposed between the spaced upper end portions of brake arms 3 and 4 in such a way as to be vertically movable with respect to the supporting member 1. The actuator 8 has a wire connector 9 for securing one end of a control wire W and cam face means engageable with the roller cam followers 6 of the brake arms 3 and 4, so that the roller contacts 6 elastically contact the cam faces by means of return springs 14 respectively, whereby the arm actuator 8 is located between the opposite upper end portions of brake arms 3 and 4.

The cam face means each comprise a substantially rectilinear first cam face 8a for displacement of the corresponding brake shoe 2 towards the wheel rim R at a substantially constant greater rate with respect to a given amount of movement of the arm actuator 8 and a second cam face 8b for displacement of the brake shoe 2 at a lower rate. The brake arms 3 and 4 swing by movement of the roller cam followers 6 first along the first cam faces 8a to bring the brake shoes 2 into contact with the wheel rim R, and then along the second cam faces 8b to urge the brake shoes 2 against the wheel rim R for achieving the braking effect.

The first and second cam faces 8a and 8b are inclined at angles $\theta_1$ and $\theta_2$ respectively with respect to a straight line Y—Y perpendicular to a vertical line X—X disposed in the direction of lifting of the arm actuator 8 as shown in Fig. 3, where the angle $\theta_1$ of inclination is made smaller and $\theta_2$ is made larger.

Hence, the respective brake arms 3 and 4 can swing as the rollers 6 move along the first cam face 8a through a large angle of swing with respect to an upward stroke of the arm actuator 8, that is, a stroke pulling the control wire W, thereby quickly moving the brake shoes 2 toward the wheel rim R. On the other hand, the brake arms 3 and 4 each swing as the rollers 6 move along the second cam face 8b through a smaller angle of swing, whereby the brake shoes 2 move quickly with respect to the stroke of the arm actuator 8 and are urged against the wheel rim R for the braking effect.

In other words, when the brake arms 3 and 4 swinging as the rollers 6 move along the first cam faces 8a reach the ends of this swinging movement the brake shoes 2 are brought into contact with the wheel rim R. Thereupon the brake arms 3 and 4 continue their swinging movement as the rollers 6 move along the second cam faces 8b to urge the brake shoes 2 against the rim R. Hence, even when the wire W is pulled slowly the brake shoes 2 make rapid contact with the wheel rim R and even when the wire W is pulled with a low effort the brake shoes 2 each provide an intensive braking effect thus ensuring a rapid braking action.

The arm actuator 8, as shown in Figs. 1 to 4, is formed of a plate member of approximately trapezoidal shape with both widthwise outside surfaces adjacent the upper ends of the brake arms 3 and 4, said widthwise opposite outside surfaces being formed at the upper portions thereof with the first cam faces 8a and at the lower portions with the second cam faces 8b in continuation of the cam faces 8a respectively.

The calliper brake as shown in Figs. 1 to 3 is in brake-off condition in which the roller cam followers 6 of the arms 3 and 4 are in engagement with the first cam faces 8a. When the wire W is pulled for exerting the braking action, the arm actuator 8 moves upward to cause the brake arms 3 and 4 to swing on movement of the rollers 6 first along the first cam faces 8a, thereby moving the brake shoes 2 toward the wheel rim R. Next, the brake arms 3 and 4, after swinging, reach the ends of first cam faces 8a, and then the brake shoes 2 are brought into contact with the wheel rim R. The brake shoes 2 are moved quickly in this first action because the brake arms 3 and 4 each swing under the action of the rollers 6 moving along the first cam faces 8a through a large angle of swing with respect to the amount of movement of the arm actuators 8, thereby being brought into contact with the wheel rim R even with a small movement of the wire W.

Then, the brake arms 3 and 4 further swing as the rollers 2 move along the second cam faces 8b and the brake shoes 2 are moved slowly against the wheel rim R because the brake arms 3 and 4 each swing at a smaller angle of swing with respect to the amount of movement of arm actuator 8. Hence, the brake shoes 2 intensify the braking effect even with low pulling force applied to the wire W, by substantially increasing the mechanical advantage of the brake thus achieving a quick and powerful braking effect.

In the calliper brake shown in Figs. 1 and 2, the support member 1 carries a support 11 having a holder 10 for an outer sheath O guiding the control wire W. The support 11 is fitted to be vertically movable in the slot 1a and carries a rotatable quick-releasing lever 12.

The quick-releasing lever 12 is used to vary the distance between the brake shoes 2 and thus the clearance between the fully withdrawn shoes and the wheel and has a projection 13 attached to the supporting member 1 and a cam face having at its one side a rotation-stop 12a. The rotation stop 12a engages with the projection 13 to fix the holder 10 to the supporting member 1, thereby keeping constant the length of control wire W relative to the outer sheath O. The lever 12 is turned counterclockwise in Fig. 1 to release the holder 10 so that it is downwardly movable whereupon the return springs 14 act to swing the brake arms 3 and 4, thereby enlarging the interval between the brake shoes 2. In addition, in Fig. 2, reference numeral 15 designates a mounting bolt for fixing the supporting member 1 to the bicycle frame.

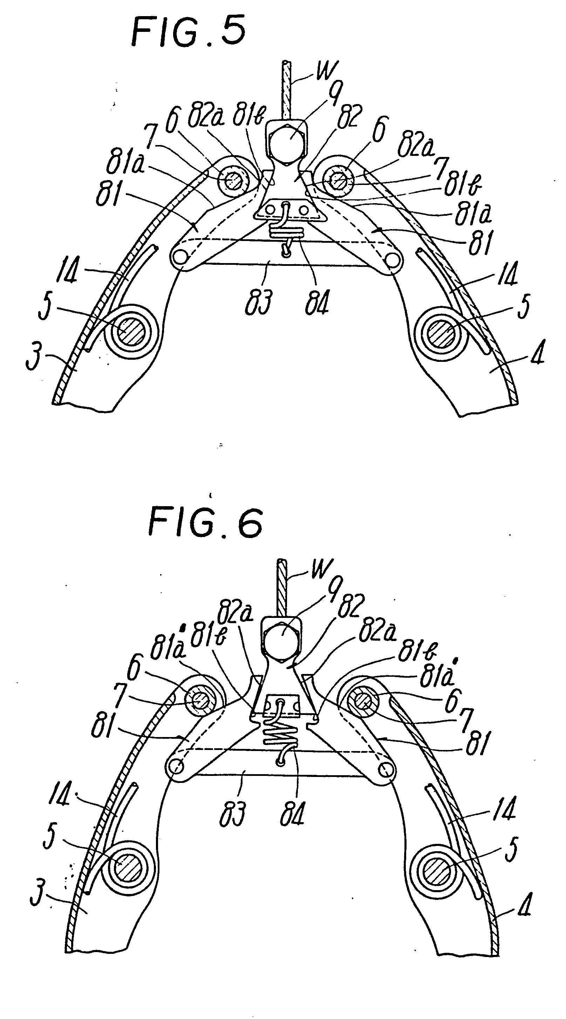

Alternatively, the arm actuator 8 may be constructed as shown in Figs. 5 and 6, or 7 and 8.

Referring to Figs. 5 and 6, a modified embodiment of the invention is shown, in which the arm actuator 8 comprises a bar-like base member 83, a pair of first and second cam bodies 81, a third cam body 82, and an elastic member 84 formed mainly of a coiled spring for connecting the third cam body 82 to the base member 83.

The first and second cam bodies 81 are formed of link-like plate members pivoted to opposite lengthwise ends of the base member 83 and provided at the widthwise outer surfaces with cam faces 81a and at the widthwise inner surfaces with engaging faces 81b. The third cam body 82 is formed of an elongate plate member which has control faces 82a at both widthwise outer surfaces, carries the wire connector 9 for the control wire W, and is interposed between the first and second cam bodies 81 so that the control faces 82a engage the engaging faces 81b at the first and second cam bodies 81 respectively. In addition, the elastic member 84 is arranged to exert a spring force greater than the sum of the forces exerted by the return springs 14.

In this construction, when the control wire W is pulled to initiate the braking action, the first and second cam bodies 81 and the third cam body 82 are moved simultaneously upwardly without relative movement therebetween and elastic deformation of elastic member 84 takes place while the brake arms 3 and 4 swing freely by movement of the rollers 6 along the cam faces 81a until they contact with the wheel rim R, at which time, the cam faces 81a function as the first cam faces to move the brake shoes 2 quickly against the wheel rim R. After the brake shoes 2 contact the wheel rim R, contact resistance between the rim R and each brake shoe 2 increases to overcome the spring force of the elastic member 84 and the swinging motion of the brake arms 3 and 4 meets considerable opposition so that the third cam body 82 only is moved upwardly, whereby the first and second cam bodies 81 swing as a result of the engaging faces 81b moving along the control faces 82a of the third cam body 82. Hence, the angle of inclination of the cam faces is changed so that they function as the second cam faces, thereby moving the brake shoes 2 slowly against the wheel rim R.

Accordingly, in Fig. 5, when the control wire W is pulled, the brake arms 3 and 4, as foregoing, swing as the rollers 6 move along the cam faces 81a which initially act as the first cam faces, so that the brake shoes 2 are moved quickly. Next, the third cam body 82 only, as described above, moves upwards and the cam bodies 81 move along the control faces 82a at a larger angle of swing whereby the brake shoes 2 are moved slowly toward the wheel rim R.

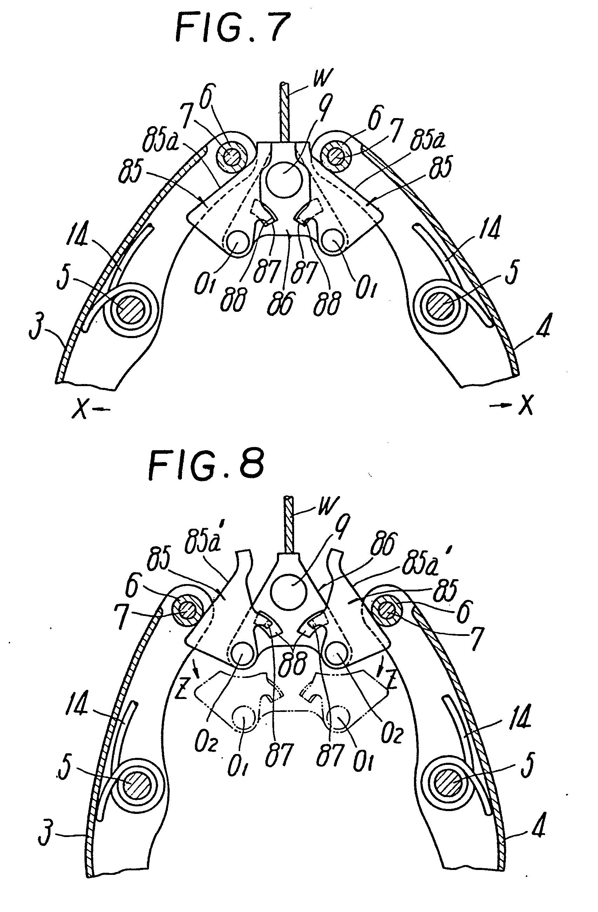

Another modified embodiment of the invention is shown in Figs. 7 and 8 in which the arm actuator 8 comprises a substantially triangular base member 86 and a pair of fourth and fifth cam bodies 85 having cam faces 85*a* and pivoted to opposite ends of the base of base member 86, the wire connector 9 for the wire W being mounted on the top of the base member 8.

In this construction, the wire W is pulled to move the base member 86 upwardly whereby to lift, towards the positions $O_2$ in Fig. 8, the pivot points $O_1$ at which the fourth and fifth cam bodies 85 are pivoted to the base member 86. When the pivot points $O_1$ move upward to allow the roller cam followers 6 in engagement with the cam faces 85*a* to move beyond the foot of a perpendicular dropped from each pivot point $O_1$ to each cam face 85*a*, the fourth and fifth cam bodies 85 swing by means of the forces of return springs 14 in the direction of the arrow Z in Fig. 8, so that the inclination of each cam face 85*a* becomes greater so that the cam faces 85*a* now function as the aforesaid second cam faces.

It is to be noted that the cam faces 85*a* have a smaller angle of inclination and function as the aforesaid first cam faces prior to the swinging motion of the fourth and fifth cam bodies 85.

It is preferable in the construction illustrated in Figs. 7 and 8 to provide projections 87 at either the fourth and fifth cam bodies 85 or the base member 86 and to provide guide portions 88 engageable with the projections 87 in either the cam bodies 85 or the base member 86, whereby the projections 87 and guide portions 88 set a maximum angle of swing of each cam body 85.

In Fig. 7, the control wire W is pulled to move upwardly the base member 86 and the fourth and fifth cam bodies 85. In the situation where the amount of the upward movement of the cam bodies 85 is less than the prescribed value, the cam bodies 85 and the base member 86 move simultaneously without relative movement so that the brake arms 3 and 4 swing quickly as the rollers 6 move along the cam faces 85*a* which function as the aforesaid first cam faces. Next, when the base member 86 moves further upwardly to bring the pivot points $O_1$ to the positions $O_2$ in Fig. 8, the return springs 14 act to swing the cam bodies 85 in the direction of the arrow Z in Fig. 8. The swinging motion of the cam bodies 85 changes the function of the cam faces 85*a* from that of the aforesaid first cam faces for quick arm movement to that of the second cam faces for achieving the braking effect, thereby urging the brake shoes 2 against the wheel rim R with low speed and higher effort. In this embodiment, each cam body 85 has only one cam face 85*a* so that the cam faces set for quick feed change accurately into cam faces set for high braking effort.

According to this invention as described hereinabove, the arm actuator movable by pulling the control wire is provided with the first cam faces capable of moving the brake shoes quickly towards the wheel rim and with the second cam faces arranged to provide slow movement of the brake shoes for achieving the braking effect. Hence, the optimum gap can be kept between each brake shoe and the wheel rim and the angle of inclination of each brake arm can be made larger with respect to a given wire movement of the control wire whereby even with a small wire movement the brake arms can achieve full braking effect. As a result, a smaller lever-stroke for the braking action enables a quick braking action and eliminates a delayed braking effect. Furthermore an intensive braking effect can be readily achieved without a great force of pull on the control wire.

## Claims

1. A calliper brake for use in applying a braking force to the rim (R) of a wheel upon pulling of a control wire (W) in use of said brake, which brake comprises a support member (1), a pair of brake arms (3, 4) pivotally mounted on the support member (1), one end of each of said brake arms (3, 4) having a brake shoe, the other ends of said brake arms (3, 4) being spaced apart and an actuator arm means (8) movable relative to the support member (1) and disposed between said other ends of the brake arms (3, 4), said arm actuator means (8) having a control wire connector (9) for securing one end of a said control wire (W) to the arm actuator means (8) in use of the brake, and presenting cam faces (8*a*, 8*b*) engageable with said other ends of said brake arms (3, 4) so that said control wire (W) when pulled moves the arm actuator means (8) thereby causing the brake arms (3, 4) to swing and move said brake shoes towards the wheel rim (R) in use of said brake, said cam faces (8*a*, 8*b*) are shaped and disposed to provide displacement of said brake shoes in a direction towards the wheel rim (R) during an initial, brake-displacement, phase of braking in which, in use of the brake, brake blocks (2) mounted in said brake shoes are brought into position, substantially adjacent said wheel rim (R) at a greater rate with respect to a given displacement of said arm actuator means (8) and from this position the cam faces (8*a*, 8*b*) are shaped and disposed to provide displacement of the brake shoes in said direction at a lower rate with respect to a said given displacement of the arm actuator means (8), during a second, braking force-applying, phase of braking in which said brake blocks (12) are pressed against said wheel rim (R) to apply a braking force thereto, characterized in that first cam face means (8*a*) are shaped and disposed to provide a greater brake displacement rate, during the initial brake displacement phase, up until the transition from said first cam face means (8*a*) to second cam face means (8*b*) of said arm actuator means (8) in controlling displacement of said brake arms (3, 4), which second cam face means (8*b*) are shaped and

disposed to provide a lower brake displacement rate during said braking force-applying phase in order to press the brake blocks (2) slowly against the wheel rim (R) with a large braking force, the cam face means (8a, 8b) being formed and disposed so that immediately before said transition said brake displacement rate is substantially greater than immediately after said transition, there being a substantial and abrupt change in the brake displacement rate at said transition whereby average brake displacement rate during the initial brake displacement phase is increased and overall braking time reduced; and in that there is provided return spring means (14) disposed for acting between said supporting member and each of said brake arms (3, 4).

2. A calliper brake according to Claim 1 in which the arm actuator means comprises a plate-form member (8) presenting to said other ends of the brake arms (3, 4) edge faces each formed as adjoining discrete first and second cam faces (8a, 8b).

3. A calliper brake according to Claim 1 in which the arm actuator means (8) comprises a base member (83), first and second cam bodies (81) pivotally connected to said base member (83) and having outer edge faces facing away from one another which form, at an initial angular inclination to said control wire (W) in the initial brake displacement phase, said first cam face means (81a) and, at a different angular inclination to the control wire (W) in the braking force-applying phase, said second cam face means (81a'), and inner edge faces facing towards one another and formed as engaging cam faces (81b), a third cam body (82) presenting two outwardly facing control cam faces (82a) engageable with respective engaging cam faces (81b) of the first and second cam bodies (81) and a resiliently deformable member (84) connecting said third cam body (82) with said base member (83), said third cam body (82) carrying said wire connector (9) for said control wire (W) and being movable relative to the first and second cam bodies (81) against the force of said resiliently deformable connecting member (84) for swinging the first and second cam bodies (81) on said base member (83) during said braking force-applying phase.

4. A calliper brake according to Claim 3 in which the resiliently deformable member (84) is arranged to exert a biasing force greater than the sum of the biasing forces exerted by the return springs (14).

5. A calliper brake according to Claim 1 in which the arm actuator means comprises a base member (86) and a pair of cam bodies (85) pivotally connected ($O_2$) to said base member (86), each said cam body (85) each having outer edge faces facing away from one another which form, at an initial angular inclination to the control wire (W) in the initial brake displacement phase, said first cam face means (85a) and, at a different angular inclination to the control wire (W) in the brake-applying phase, said second cam face means (85a'), said base member (86) carrying said wire connector (9) for a said control wire (W), the pivotal connections ($O_2$) between said cam bodies (85) and said base member (86) being disposed so that when said control wire (W) is pulled, in use of the brake, to move said base member (86) thereby displacing said pivotal connection points ($O_2$) the cam engaging positions of said other ends of said brake arms (3, 4) with the respective first cam faces (85a) are initially nearer the longitudinal axis of the control wire (W) of the control wire connector (9) than are said pivotal connection points ($O_2$) during the brake displacement phase of braking and as said base member (86) continues to move, said cam engaging positions move along said first cam faces (85a) moving said cam engaging positions away from said control wire axis until at a transition from the first to the second cam faces (85a') the cam engaging positions are farther from the control wire axis than the pivotal connection points ($O_2$) whereupon the thrust of the brake arms (3, 4) on the cam bodies (85) causes the cam bodies (85) to swing about their pivotal connection points ($O_2$) to the base member (86) thereby changing the inclination of the cam faces (85a') relative to said control wire axis so that the first cam face means (85a) now constitute the second cam face means (85a').

6. A calliper brake according to Claim 5, in which interengaging projections (87) and guide portions (88) are provided on the base member (86) and cam bodies (85) for controlling the swinging movement of the cam bodies (85) about their pivotal connection points ($O_2$) to the base member (86).

7. A calliper brake according to any one of Claims 1 to 6 wherein said first cam face means (8a) is substantially rectilinear to provide a substantially constant brake displacement rate during the initial brake displacement phase.

**Patentansprüche**

1. Sattelbremse zum Aufbringen einer Bremskraft auf die Felge (R) eines Rads beim Ziehen eines Kabelzugs (W) beim Gebrauch dieser Bremse, wobei die Bremse aus einem Trägerglied (1), einem Paar gelenkig auf dem Trägerglied (1) gelagerter Bremsschenkel (3, 4), die jeweils an einem Ende einen Bremsschuh aufweisen und deren andere Enden auseinanderliegen, und einer Betätigungsarmvorrichtung (8) besteht, die gegenüber dem Trägerglied (1) beweglich und zwischen jenen anderen Enden der Bremsschenkel (3, 4) angeordnet ist, wobei diese Armbetätigungsvorrichtung (8) ein Verbindungsstück (9) zum Kabelzug zur Befestigung des einen Endes des Kabelzugs (W) an der Armbetätigungsvorrichtung (8) beim Gebrauch der Bremse sowie Nockenflächen (8a, 8b) aufweist, die mit jenen anderen Enden der besagten Bremsschenkel (3, 4) in Eingriff kommen können, so dass dieser Kabelzug (W) beim Ziehen die Armbetätigungsvorrichtung (8) bewegt und dadurch beim Gebrauch dieser Bremse die Bremsschenkel (3, 4) schwenken und diese Bremsschuhe sich auf die Radfelge (R) hin bewegen lässt, und wobei diese Nockenflächen (8a, 8b) so ausgebildet und angeordnet sind, dass sie eine Verschiebung dieser Bremsschuhe in Richtung auf die Radfelge (R) während einer anfänglichen Bremsverschiebungsphase beim Bremsen bewirken, in welcher beim Gebrauch der Bremse in jenen Bremsschuhen angebrachte Bremsblöcke (2) mit grösserer Geschwindigkeit, als einer gegebenen Verschiebung der besagten Armbetätigungsvorrichtung (8) entspricht, im wesentlichen direkt neben jener Radfelge (R) in Stellung gebracht werden, und von dieser Stelle an die Nockenflächen (8a, 8b) so ausgebildet und angeordnet sind, dass sie eine Verschiebung der Bremsschuhe in dieser Richtung mit einer niedrigeren Geschwindigkeit, als einer solchen gegebenen Verschiebung der Armbetätigungsvorrichtung (8) entspricht, in einer zweiten, die Bremskraft aufbringenden Bremsphase bewirken, in welcher diese Bremsblöcke (12) gegen diese Radfelge (R) zum Aufbringen einer Bremskraft darauf gedrückt werden, dadurch gekennzeichnet, dass erste Nockenflächenteile (8a) so ausgebildet und angeordnet sind, dass sie eine grössere Bremsverschiebungsgeschwindigkeit während der anfänglichen Bremsverschiebungsphase bis zum Uebergang von diesen ersten Nockenflächenteilen (8a) auf zweite Nockenflächenteile (8b) dieser Armbetätigungsvorrichtung (8) bei der Steuerung der Verschiebung dieser Bremsschenkel (3, 4) ergeben, welche zweiten Nockenflächenteile (8b) so ausgebildet und angeordnet sind, dass sie während jener Bremskraftaufbringungsphase eine niedrigere Bremsverschiebungsgeschwindigkeit ergeben, um die Bremsblöcke (2) mit hoher Bremskraft langsam gegen die Radfelge (R) zu drücken, wobei die Nockenflächenteile (8a, 8b) so gestaltet und angeordnet sind, dass unmittelbar vor jenem Uebergang diese Bremsverschiebungsgeschwindigkeit erheblich grösser als unmittelbar danach ist, wobei bei diesem Uebergang eine erhebliche und sprunghafte Aenderung der Bremsverschiebungsgeschwindigkeit erfolgt, wodurch die mittlere Bremsverschiebungsgeschwindigkeit während der anfänglichen Bremsverschiebungsphase erhöht und die Gesamtbremszeit verringert wird, und dass zur Einwirkung zwischen jenem Trägerglied und jenen Bremsschenkeln (3, 4) jeweils Rückstellfedermittel (14) vorgesehen sind.

2. Sattelbremse nach Anspruch 1, worin die Armbetätigungsvorrichtung aus einem plattenförmigen Glied (8) besteht, das gegenüber jenen anderen Enden der Bremsschenkel (3, 4) Randflächen aufweist, die jeweils als nebeneinanderliegende, diskrete erste und zweite Nockenflächen (8a, 8b) ausgebildet sind.

3. Sattelbremse nach Anspruch 1, worin die Armbetätigungsvorrichtung (8) aus einem Grundglied (83), ersten und zweiten Nockenkörpern (81), die gelenkig damit verbunden sind und voneinander wegweisende Aussenrandflächen, die bei einer anfänglichen Winkelneigung zu jenem Kabelzug (W) in der anfänglichen Bremsverschiebungsphase diese ersten Nockenflächenteile (81a) und bei einer unterschiedlichen Winkelneigung zum Kabelzug (W) in der Bremskraftaufbringungsphase jene zweiten Nockenflächenteile (81a') bilden, sowie einander gegenüberliegende, als Eingriffsnockenflächen (81b) ausgebildet Innenrandflächen besitzen, einem dritten Nockenkörper (82) mit zwei nach aussen weisenden Steuernockenflächen (82a) zum Eingriff mit entsprechenden Eingriffsnockenflächen (81b) auf den ersten und zweiten Nockenkörpern (81) und einem federnd verformbaren Glied (84) besteht, das diesen dritten Nockenkörper (82) mit jenem Grundglied (83) verbindet, wobei dieser dritte Nockenkörper (82) jenes Verbindungsstück (9) für den besagten Kabelzug (W) trägt und gegenüber den ersten und zweiten Nockenkörpern (81) entgegen der Kraft dieses federnd verformbaren Verbindungsglieds (84) beweglich ist, um die ersten und zweiten Nockenkörper (81) auf diesem Grundglied (83) während jener Bremskraftaufbringungsphase zu verschwenken.

4. Sattelbremse nach Anspruch 3, worin das federnd verformbare Glied (84) so angeordnet ist, dass es eine Vorspannkraft ausübt, die grösser als die Summe der von den Rückstellfedern (14) ausgeübten Vorspannkräfte ist.

5. Sattelbremse nach Anspruch 1, worin die Armbetätigungsvorrichtung aus einem Grundglied (86) und einem Paar gelenkig damit verbundener (O₂) Nockenkörper (85) besteht, wobei jeder Nockenkörper (85) jeweils voneinander wegweisende Aussenrandflächen, die bei einer anfänglichen Winkelneigung zum Kabelzug (W) in der anfänglichen Bremsverschiebungsphase jene ersten Nockenflächenteile (85a) und bei einer unterschiedlichen Winkelneigung zum Kabelzug (W) in der Bremskraftaufbringungsphase jene zweiten Nockenflächenteile (85a') bilden, besitzt, wobei dieses Grundglied (86) jenes Verbindungsstück (9) für den besagten Kabelzug (W) trägt, wobei die gelenkigen Verbindungen (O₂) zwischen diesen Nockenkörpern (85) und jenem Grundglied (86) so angeordnet sind, dass beim Ziehen dieses Kabelzugs (W) im Gebrauch der Bremse, um dieses Grundglied (86) zu bewegen und dadurch jene Gelenkverbindungspunkte (O₂) zu verschieben, die Nockeneingriffsstellen jener anderen Enden der besagten Bremsschenkel (3, 4) mit den entsprechenden ersten Nockenflächen (85a) anfänglich näher der Längsachse des Kabelzugs (W) des Kabelzugverbindungsstücks (9) liegen als jene Gelenkverbindungspunkte (O₂) während der Bremsverschiebungsphase beim Bremsen und bei fortgesetzter Bewegung jenes Glieds (86) diese Nockeneingriffsstellen sich entlang jenem ersten Nockenflächen (85a) bewegen und die besagten Nockeneingriffsstellen von dieser Kabelzugachse hinwegbewegen, bis bei einem Uebergang von den ersten zu den zweiten Nockenflächen (85a') die Nockeneingriffsstellen weiter entfernt von der Kabelzugachse sind als die Gelenkverbindungspunkte (O₂), worauf der Schub der Bremsschenkel (3, 4) auf die Nockenkörper (85) diese im ihre Gelenkverbindungspunkte (O₂) zum Grundglied (86) hin schwenken lässt, wodurch sich die Neigung der Nockenflächen (85a') zu jener Kabelzugachse ändert, sodass die ersten Nockenflächenteile (85a) nunmehr die zweiten Nockenflächenteile (85a') darstellen.

6. Sattelbremse nach Anspruch 5, worin gegenseitig eingreifende Ansätze (87) und Führungsteile (88) auf dem Grundglied (86) und den Nockenkörpern (85) vorgesehen sind, um die Schwenkbewegung der Nockenkörper (85) um ihre Gelenkverbindungspunkte (O₂) zum Grundglied (86) hin zu steuern.

7. Sattelbremse nach einem der Ansprüche 1 bis 6, worin diese ersten Nockenflächenteile (8a) im wesentlichen rechteckig sind, damit sie während der anfänglichen Bremsverschiebungsphase eine weitgehend konstante Bremsverschiebungsgeschwindigkeit liefern.

**Revendications**

1. Frein à mâchoires utilisable pour appliquer une force de freinage sur la jante (R) d'une roue, par traction d'un câble de commande (W) lors de l'utilisation du frein, ce frein comprenant une pièce de support (1), une paire de bras de frein (3, 4) montés de façon pivotante sur la pièce de support (1), une extrémité de chacun des bras de frein (3, 4) portant un patin de frein, les autres extrémités des bras de frein (3, 4) étant espacées l'une de l'autre, et des moyens (8) de commande des bras qui sont mobiles par rapport à la pièce de support (1) et qui sont disposés entre lesdites autres extrémités des bras de frein (3, 4), les moyens (8) de commande des bras comportant un moyen de jonction (9) de câble de commande afin de fixer une extrémité d'un tel câble de commande (W) aux moyens (8) de commande des bras pour l'utilisation du frein, et présentant des surfaces de came (8a, 8b) qui viennent en contact avec lesdites autres extrémités des bras de frein (3, 4) de façon à ce que le câble de commande (W), lorsqu'on le tire, déplace les moyens (8) de commande des bras, ce qui provoque le pivotement des bras de frein (3, 4) et le déplacement des patins de frein vers la jante de roue (R) lors de l'utilisation du frein, les surfaces de came (8a, 8b) ayant une configuration et une disposition qui provoquent le déplacement des patins de frein en direction de la jante de roue (R) pendant une phase initiale du freinage, qui est une phase de déplacement du frein, dans laquelle, lors de l'utilisation du frein, des sabots de frein (2) montés dans les patins de frein sont amenés dans une position sensiblement adjacente à la jante de roue R, à une vitesse plus grande par rapport à un déplacement donné des moyens (8) de commande de bras, et les surfaces de came (8a, 8b) ayant à partir de cette position une configuration et une disposition qui provoquent le déplacement des patins de frein dans ladite direction à une vitesse plus faible par rapport à une dit déplacement donné des moyens (8) de commande de bras, pendant une deuxième phase du freinage, qui est une phase d'application de la force de freinage, dans laquelle les sabots de frein (2) sont pressées contre la jante de roue (R) pour appliquer une force de freinage à cette dernière, ledit frein étant caractérisé en ce que des premières surfaces de came (8a) ont une configuration et une disposition qui provoquent une plus grande vitesse de déplacement de frein, pendant la phase initiale de déplacement du frein, jusqu'au raccordement desdites premières surfaces de came (8a) à des deuxièmes surfaces de came (8b) des moyens (8) de commande de bras, pour la commande du déplacement des bras de frein (3, 4), les deuxièmes surfaces de came (8b) ayant une configuration et une disposition que procurent une vitesse plus faible de déplacement du frein pendant la phase d'application de la force de freinage, afin de presser les sabots de frein (2) lentement contre la jante de roue (R) avec une grande force de freinage, les surfaces de came (8a, 8b) ayant une configuration et une disposition telles qu'immédiatement avant ledit raccordement, la vitesse de déplacement du frein soit sensiblement plus grande qu'immédiatement après ce raccordement, une variation sensible et brusque de la vitesse de déplacement du frein se produisant au raccordement, de sorte que la vitesse moyenne de déplacement du frein pendant la phase initiale de déplacement du frein est augmentée et que le temps total de freinage est réduit; et en ce qu'il comporte des moyens élastiques (14) de rappel, disposés pour agir entre la pièce de support et chacun des bras de frein (3, 4).

2. Frein à mâchoires suivant la revendication 1, caractérisé en ce que les moyens de commande des bras comprennent une pièce (8) en forme de plaque comportant, auxdites autres extrémités des bras de frein (3, 4), des bords qui constituent chacun des premières et deuxièmes surfaces de came (8a, 8b), distinctes et adjacentes.

3. Frein à mâchoires suivant la revendication 1, caractérisé en ce que les moyens (8) de commande de bras comprennent une pièce de base (83), des premier et deuxième corps de came (81) reliés de façon pivotante à la pièce de base (83) et comportant des faces de bords extérieurs tournées à l'opposé l'une de l'autre qui constituent, à une inclinaison angulaire initiale par rapport au câble de commande (W) dans la phase initiale de déplacement du frein, les premières surfaces de came (81*a*) et, à une inclinaison angulaire différente par rapport au câble de commande (*W*) dans la phase d'application de la force de freinage, les deuxièmes surfaces de came (81*a*') et des faces de bords intérieurs tournées l'une vers l'autre et constituant des surfaces (81*b*) de contact de came, un troisième corps de came (82) comportant deux surfaces de came de commande (82*a*) tournées vers l'extérieur qui peuvent venir en contact avec les surfaces de contact de came respectives (81*b*) des premier et deuxième corps de came (81) et une pièce (84) élastiquement déformable reliant le troisième corps de came (82) à la pièce de base (83), le troisième corps de came (82) portant le moyen de jonction de câble (9) pour le câble de commande (*W*) et étant mobile par rapport aux premiers et deuxièmes corps de came (81), en antagonisme à la force exercée par la pièce de liaison (84) élastiquement déformable, afin de faire pivoter les premier et deuxième corps de came (81) sur la pièce de base (83) pendant la phase d'application de la force de freinage.

4. Frein à mâchoires suivant la revendication 3, caractérisé en ce que la pièce (84) élastiquement déformable est conçue pour exercer une force de poussée supérieure à la somme des forces de poussée exercées par les ressorts de rappel (14).

5. Frein à mâchoires suivant la revendication 1, caractérisé en ce que les moyens de commande des bras comprennent une pièce de base (86) et deux corps de came (85) reliés de façon pivotante (en $O_2$) à la pièce de base (86), chaque corps de came (85) comportant des faces de bords extérieurs tournées à l'opposé l'une de l'autre qui constituent, à une inclinaison angulaire initiale par rapport au câble de commande (*W*) dans la phase initiale de déplacement du frein, les premières surfaces de came (85*a*) et, à une inclinaison angulaire différente par rapport au câble de commande (*W*) dans la phase d'application de la force de freinage, les deuxièmes surfaces de came (85*a*'), la pièce de base (86) portant le moyen de jonction de câble (9) pour un câble de commande (*W*), les liaison de pivotement ($O_2$) entre les corps de came (85) et la pièce de base (86) étant disposée, de façon à ce que, lorsque le câble de commande (*W*) est tiré lors du fonctionnement du frein, pour déplacer la pièce de base (86) et déplacer ainsi les points ($O_2$) de liaison pivotante, les positions de contact de came desdites autres extrémités des bras de frein (3, 4) avec les premières surfaces de came (85*a*) respectives soient initialement plus près de l'axe longitudinal du câble de commande (*W*) et du moyen de jonction (9) du câble de commande que ne le sont les points ($O_2$) de liaison pivotante pendant la phase de freinage représentée par le déplacement du frein et, lorsque la pièce de base (86) continue à se déplacer, les positions de contact de came se déplacent le long des premières surfaces de came (85*a*) de manière à éloigner les positions de contact de came dudit axe du câble de commande, jusqu'à ce que, à un raccordement des premières surfaces de cames aux deuxièmes surfaces de came (85*a*'), les positions de contact de came soient plus éloignées de l'axe du câble de commande que les points ($O_2$) de liaison pivotante, de sorte que la poussée des bras de frein (3, 4) sur les corps de came (85) provoque le pivotement des corps de came (85) autour de leurs points ($O_2$) de liaison pivotante avec la pièce de base (86), ce qui modifie l'inclinaison des surfaces de came (85*a*') par rapport à l'axe du câble de commande, de sorte que les premières surfaces de came (85*a*) constituent alors les deuxièmes surfaces de came (85*a*').

6. Frein à mâchoires suivant la revendication 5, caractérisé en ce que des projections (87) et des parties de guidage (88), qui s'interpénètrent sont prévues sur la pièce de base (86) et les corps de came (85) pour commander le mouvement de pivotement des corps de came (85) autour de leurs points ($O_2$) de liaison pivotante avec la pièce de base (86).

7. Frein à mâchoires suivant l'une quelconque des revendications 1 à 6, caractérisé en ce que les premières surfaces de came (8*a*) sont sensiblement rectilignes, pour procurer une vitesse sensiblement constante de déplacement du frein pendant la phase initiale de déplacement du frein.

O 023 414

FIG. 1
FIG. 2
FIG. 3
FIG. 4

1

0 023 414

# FIG.5

# FIG.6

2

# FIG. 7

# FIG. 8